# EUROPEAN PATENT APPLICATION

(11) **EP 4 807 845 A1**
(43) Date of publication of application: **16.09.2026**
(21) Application number: 24887225.1
(22) Date of filing: 30.01.2024
(51) Int. Cl.: H01M 10/0566, H01M 10/054

(54) **SODIUM SECONDARY BATTERY AND ELECTRIC DEVICE**

(30) Priority: 09.11.2023 CN 202311486636
(71) Applicant: Contemporary Amperex Technology Co., Limited, Ningde, Fujian 352100 (CN)
(72) Inventor: WU, Kai, Ningde, Fujian 352100 (CN); CHEN, Peipei, Ningde, Fujian 352100 (CN); ZOU, Hailin, Ningde, Fujian 352100 (CN); TIE, Zhiwei, Ningde, Fujian 352100 (CN)
(74) Representative: Gong, Jinping
(86) International application number: PCT/CN2024/074690
(87) International publication number: WO 2025/097596

(57) **Abstract**

A sodium secondary battery and an electric device. The sodium secondary battery comprises a negative electrode sheet and an electrolyte, wherein the negative electrode sheet comprises a negative electrode film layer, the negative electrode film layer containing calcium; and the electrolyte comprises a first component, the first component being a fluorocarbonate compound. The sodium secondary battery can reduce the volume expansion rate of a battery after high-temperature storage, and improve the low-temperature charging performance, first effect and cycling stability of the battery.

## Description

### CROSS-REFERENCE TO RELATED APPLICATIONS

This application claims priority to Chinese Patent Application No. 202311486636.7, entitled "SODIUM SECONDARY BATTERY AND ELECTRIC DEVICE" filed on November 09, 2023, which is incorporated herein by reference in its entirety.

### TECHNICAL FIELD

This application relates to the technical field of secondary batteries, and in particular, to a sodium secondary battery and an electric device.

### BACKGROUND

In recent years, secondary batteries are widely used in energy storage power systems such as hydroelectric power stations, thermal power stations, wind power stations, and solar power stations, as well as a variety of fields such as electric tools, electric bicycles, electric motorcycles, electric vehicles, military equipment, and aerospace. With the wide application of secondary batteries, higher requirements have also been placed on cycling performance, service life, and the like of the secondary batteries.

A sodium secondary battery has significant advantages over a lithium secondary battery in terms of resources and costs. However, severe gas evolution during cycling and storage limits further application of the sodium secondary battery.

### SUMMARY

This application is made in view of the foregoing problems, and an objective thereof is to provide a sodium secondary battery, in order to reduce gas evolution in the sodium secondary battery and improve cycling stability of the battery.

According to a first aspect of this application, a sodium secondary battery is provided. The sodium secondary battery includes a negative electrode sheet, where the negative electrode sheet includes a negative electrode film layer, and the negative electrode film layer contains calcium; and an electrolyte, where the electrolyte includes a first component, and the first component is a fluorinated carbonate compound.

The introduction of calcium into the negative electrode film layer can induce deposition of sodium ions, help suppress formation of sodium dendrites, and reduce oxidative gas evolution of unstable components generated by the sodium dendrites at the negative electrode. This in turn reduces gas evolution at the negative electrode during discharge and lowers a volume expansion rate of the battery after high-temperature storage. However, calcium tends to form calcium hydroxide during negative electrode slurry mixing, resulting in high impedance and low initial Coulombic efficiency of the battery. This in turn reduces kinetic performance of the battery, especially charging performance of the battery at low temperatures. After being introduced into the electrolyte, the fluorinated carbonate compound can react with calcium hydroxide during cycling, to form stable CaF₂, thereby reducing the content of calcium hydroxide and mitigating the negative impact of calcium hydroxide on the negative electrode. In addition, a stable solid electrolyte interphase (an SEI film) component is formed on a negative electrode surface, thereby improving the kinetic performance and the initial Coulombic efficiency of the battery while reducing gas evolution of the unstable components at the negative electrode, and comprehensively improving cycling stability of the battery.

In any implementation, based on a total mass of the electrolyte, a mass fraction of the fluorinated carbonate compound is denoted as a, based on a total mass of the negative electrode film layer, a mass fraction of calcium in the negative electrode film layer is denoted as b, and a and b satisfy: a/b ≥ 1. In some implementations, a and b satisfy: 10000 ≥ a/b ≥ 10.

When a value of a/b is within an appropriate range, through a synergistic effect of calcium in the negative electrode and the fluorinated carbonate compound, the sodium secondary battery can effectively suppress gas evolution at the negative electrode, thereby reducing gas evolution in the battery during high-temperature storage, and improving the kinetic performance, the initial Coulombic efficiency, and the cycling stability of the battery.

In any implementation, based on the total mass of the electrolyte, the mass fraction a of the fluorinated carbonate compound ranges from 0.01% to 10%. In some implementations, based on the total mass of the electrolyte, the mass fraction a of the fluorinated carbonate compound ranges from 0.2% to 10%.

When the mass fraction a of the fluorinated carbonate compound is within an appropriate range, the fluorinated carbonate compound can form a complex with calcium hydroxide, thereby reducing the content of calcium hydroxide and improving the kinetic performance and the initial Coulombic efficiency. In addition, the fluorinated carbonate compound can, together with calcium hydroxide, form stable organic and inorganic components in the negative electrode SEI film, thereby reducing gas evolution of the unstable components at the negative electrode, reducing a gas evolution rate of the battery after high-temperature storage, and comprehensively improving the cycling stability of the battery.

In any implementation, based on the total mass of the negative electrode film layer, the mass fraction b of calcium in the negative electrode film layer ranges from 1 ppm to 3000 ppm. In any implementation, based on the total mass of the negative electrode film layer, the mass fraction b of calcium in the negative electrode film layer ranges from 50 ppm to 1000 ppm.

When the mass fraction b of calcium in the negative electrode film layer is within an appropriate range, it can not only mitigate the negative impact of excessively high calcium content on the impedance and the initial Coulombic efficiency of the secondary battery, but also fully exert the effect of calcium in suppressing dendrites and reducing gas evolution, thereby improving low-temperature charging performance, the initial Coulombic efficiency, and room-temperature cycling capacity retention of the battery while reducing gas evolution in the battery. When the mass fraction b of calcium in the negative electrode film layer ranges from 50 ppm to 1000 ppm, it further improves the kinetic performance, the initial Coulombic efficiency, and the cycling stability of the battery while reducing the gas evolution rate of the battery.

In any implementation, the fluorinated carbonate compound includes a compound represented by Formula I:

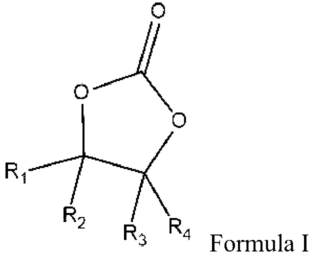

where R₁, R₂, R₃, and R₄ each independently include at least one of a hydrogen atom, a halogen atom, a C₁₋₆ hydrocarbyl group, a C₁₋₃ haloalkyl group, a C₁₋₃ alkoxy group, a C₁₋₃ haloalkoxy group, an ester group, a cyano group, a sulfonic acid group, and an isocyanate group; and at least one of R₁, R₂, R₃, and R₄ is a fluorine atom.

Cyclic fluorinated carbonate in which at least one of R₁, R₂, R₃, and R₄ is a fluorine atom is prone to ring-opening, to form an SEI film on the negative electrode surface, thereby reducing gas evolution in the battery and improving the kinetic performance, the initial Coulombic efficiency, and the cycling stability of the battery.

In any implementation, the fluorinated carbonate compound includes at least one of the following compounds:

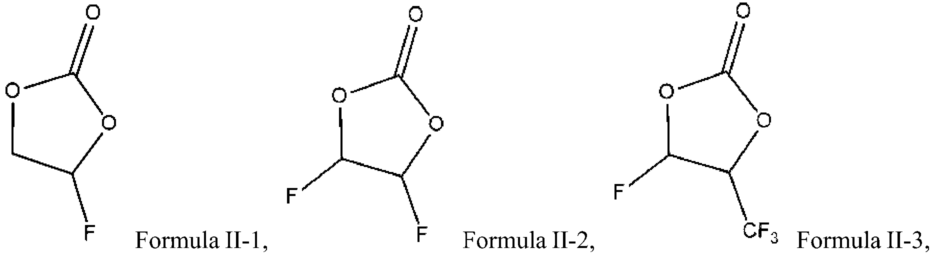

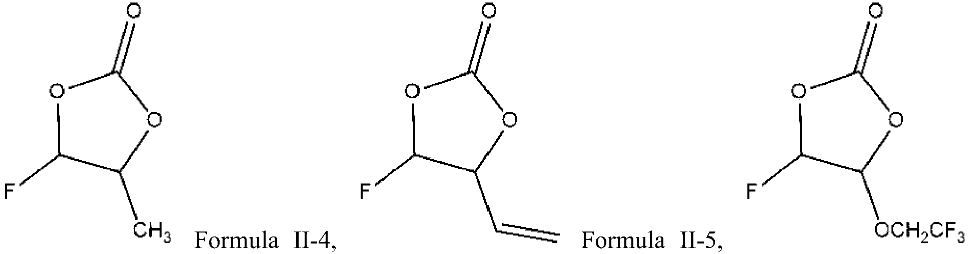

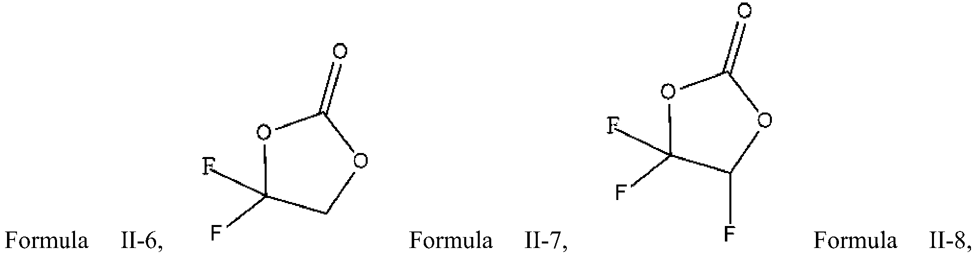

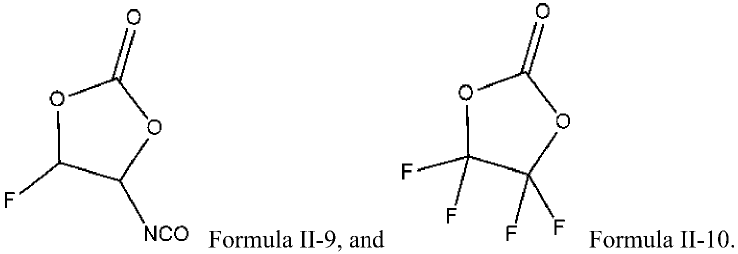

In any implementation, the electrolyte further includes a second component, and the second component is difluoro(oxalato)borate.

A composition of the SEI film formed at the negative electrode film layer interface of the sodium secondary battery mainly includes sodium alkyl carbonate (ROCO₂Na) and sodium carbonate. However, compared with lithium alkyl carbonate, sodium alkyl carbonate has higher solubility in a solvent, which renders the SEI film of the sodium secondary battery highly unstable. As a result, continuous side reactions occur between the electrolyte and the negative electrode film layer. This is also an important reason for short service life of sodium secondary batteries.

Difluoro(oxalato)borate has a high reduction potential, and may be reduced prior to the solvent to form a film. This effectively suppresses formation of easily soluble substances such as sodium alkyl carbonate. In addition, difluoro(oxalato)borate can form a thin, dense, low-impedance SEI film containing a large amount of inorganic components such as sodium fluoride and sodium borate, which works synergistically with organic components generated from the fluorinated carbonate compound, to balance flexibility and stability of the SEI film, thereby further suppressing gas evolution and improving the kinetic performance, the initial Coulombic efficiency, and the cycle life of the sodium secondary battery.

In any implementation, based on a total mass of the electrolyte, a mass fraction of difluoro(oxalato)borate is denoted as c, a mass fraction of the fluorinated carbonate compound is denoted as a, and c and a satisfy: c/a ≥ 0.001. In some implementations, c and a satisfy: 2 ≥ c/a ≥ 0.1.

When a value of c/a is within an appropriate range, through a synergistic effect of difluoro(oxalato)borate and fluorinated carbonate in the electrolyte, the stability, the flexibility, and a sodium conduction property of the SEI film are improved, gas evolution in the battery during high-temperature storage is reduced, the kinetic performance and the initial Coulombic efficiency of the battery are improved, and the cycling stability of the battery is comprehensively improved.

In any implementation, based on the total mass of the electrolyte, the mass fraction c of difluoro(oxalato)borate ranges from 0.01% to 5%. In some implementations, based on the total mass of the electrolyte, the mass fraction c of difluoro(oxalato)borate ranges from 0.1% to 2%.

When the mass fraction c of difluoro(oxalato)borate is within an appropriate range, difluoro(oxalato)borate can form a complex with the fluorinated carbonate compound, thereby improving the stability and the flexibility of the SEI film, reducing gas evolution of the unstable components at the negative electrode, and reducing the gas evolution rate of the battery after high-temperature storage. In addition, the sodium conduction property of the SEI film can be improved, the kinetic performance and the initial Coulombic efficiency of the battery can be improved, and the cycling stability of the battery can be comprehensively improved.

In any implementation, the general chemical formula of difluoro(oxalato)borate is represented by Formula III:

(F₂C₂O₄B)_{y}M Formula III

where M includes one or more of Li, Na, K, Rb, Cs, Mg, Ca, Ba, Fe, Ni, and Al, and y is 1, 2, or 3.

In any implementation, the negative electrode film layer includes a negative electrode active material. The negative electrode active material includes one or more of hard carbon, sodium metal, sodium-tin alloy, and metal oxide.

In any implementation, the sodium secondary battery further includes a positive electrode sheet. The positive electrode sheet includes a positive electrode active material. The positive electrode active material includes sodium transition metal oxide.

In any implementation, the positive electrode active material further contains copper, and based on a total mass of the positive electrode active material, a mass fraction of copper ranges from 0.01% to 23%. In some implementation, based on the total mass of the positive electrode active material, the mass fraction of copper ranges from 6.5% to 18%.

The positive electrode active material containing copper has a stable structure, and can further improve the cycling stability of the battery. When the mass fraction of copper is within an appropriate range, the cycling stability of the battery is improved without the risk of copper being converted into Cu³⁺ at high voltage. This avoids accelerated decomposition of the electrolyte due to high oxidizability of Cu³⁺, thereby preventing drastic aggravation of gas evolution in the battery. When the mass fraction of copper is within the range of 6.5% to 18%, low gas evolution, high kinetic performance, high initial Coulombic efficiency, and high cycling stability of the secondary battery can further be achieved.

In any implementation, sodium transition metal oxide includes NaₘCuₙXₒFeₚMn_{q}O₂₋ₛ, where X includes one or more of Li, Be, B, Mg, Al, K, Ca, Ti, Co, Ni, Zn, Ga, Sr, Y, Nb, Mo, In, Sn, Fe, and Ba, 0 ≤ m ≤ 0.5, 0 ≤ n ≤ 0.5, 0 ≤ o < 0.5, 0 ≤ p ≤ 0.5, 0 < q ≤ 0.68, n+o+p+q=1, and 0 ≤ s < 0.2. In some implementations, sodium transition metal oxide includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

Sodium transition metal oxide (the positive electrode active material) possess a high voltage, and contains anionic oxygen that contributes to capacity while generating a large amount of protonic hydrogen. This accelerates the oxidative gas evolution of the unstable components at the negative electrode, leading to severe gas evolution on the negative electrode side. Through a synergistic effect of calcium in the negative electrode film layer in the negative electrode sheet and the fluorinated carbonate compound in the electrolyte that are provided in the embodiments of this application, gas evolution in the battery can be effectively reduced, and the kinetic performance, the initial Coulombic efficiency, and the cycling stability of the battery can be improved while improving the capacity and the energy density of the battery.

In any implementation, the electrolyte further includes a third component, and the third component is one or more of vinylene carbonate, vinyl ethylene carbonate, 1,3-propane sultone, prop-1-ene-1,3-sultone, ethylene sulfate, maleic anhydride, succinic anhydride, triallyl phosphate, sodium tetrafluoro(oxalato)phosphate, sodium difluorobis(oxalato)phosphate, sodium difluorophosphate, and sodium fluorosulfonate.

The composition of the SEI film formed at the negative electrode interface of the sodium secondary battery mainly includes sodium alkyl carbonate and sodium carbonate. However, compared with lithium alkyl carbonate, sodium alkyl carbonate has higher solubility in an electrolyte solvent, which renders the SEI film of the sodium secondary battery highly unstable. As a result, continuous side reactions occur between the electrolyte and the negative electrode, leading to poor cycling performance of the second battery. The second component containing unsaturated functional groups can be reduced prior to the solvent to form a film at the negative electrode, and cooperates with the fluorinated carbonate compound and calcium in the negative electrode to jointly suppress formation of easily soluble substances such as sodium alkyl carbonate, thereby reducing gas evolution in the battery, and improving the kinetic performance, the initial Coulombic efficiency, and the cycling stability of the battery.

In any implementation, based on a total mass of the electrolyte, a mass fraction of the third component ranges from 0.01% to 10%. In some implementation, based on the total mass of the electrolyte, the mass fraction of the third component ranges from 0.1% to 5%.

When the mass fraction of the third component is within the foregoing interval, a thickness of the SEI film can be controlled while mitigating gas evolution in the battery, thereby achieving both low impedance and low gas evolution of the battery, and improving the kinetic performance, the initial Coulombic efficiency, and the cycling stability of the battery.

According to a second aspect of this application, an electric device is provided, including the sodium secondary battery according to the first aspect.

### BRIEF DESCRIPTION OF THE DRAWINGS

FIG. 1 is a schematic diagram of a secondary battery according to an implementation of this application.
FIG. 2 is an exploded view of the secondary battery according to the implementation of this application shown in FIG. 1.
FIG. 3 is a schematic diagram of a battery module according to an implementation of this application.
FIG. 4 is a schematic diagram of a battery pack according to an implementation of this application.
FIG. 5 is an exploded view of the battery pack according to the implementation of this application shown in FIG. 4.
FIG. 6 is a schematic diagram of an electric device powered by a secondary battery according to an implementation of this application.

### Reference numerals:

1: battery pack; 2: upper box; 3: lower box; 4: battery module; 5: secondary battery; 51: case; 52: electrode assembly; and 53: cover plate.

### DETAILED DESCRIPTION

The following describes implementations of a sodium secondary battery and an electric device specifically disclosed in this application in detail with appropriate reference to the accompanying drawings. However, unnecessary detailed descriptions may be omitted. For example, detailed descriptions of well-known matters or repetitive descriptions of substantially identical structures may be omitted. This is to avoid the following description becoming unnecessarily lengthy, and to facilitate understanding by a person skilled in the art. In addition, the accompanying drawings and the following descriptions are provided for a person skilled in the art to fully understand this application and are not intended to limit the subject matter recorded in the claims.

A "range" disclosed in this application is defined in the form of a lower limit and an upper limit. A given range is defined by selecting a lower limit and an upper limit, and the selected lower limit and the selected upper limit define boundaries of a particular range. The range defined in this manner may include or may exclude end values, and may be combined in any form, that is, any lower limit may be combined with any upper limit to form a new range. For example, if a range of 60 to 120 and a range of 80 to 110 are listed for a specific parameter, it is understood that a range of 60 to 110 and a range of 80 to 120 are also contemplated. In addition, if listed minimum range values are 1 and 2, and listed maximum range values are 3, 4, and 5, all of the following ranges are contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a and b, and both a and b are real numbers. For example, a numerical range "0 to 5" represents that all real numbers between "0 and 5" are listed herein, and "0 to 5" is merely an abbreviated representation of combinations of these numbers. In addition, when a parameter is expressed as an integer ≥ 2, it is equivalent to disclosing that the parameter is, for example, an integer such as 2, 3, 4, 5, 6, 7, 8, 9, 10, 11, or 12.

Unless otherwise specified, all implementations and optional implementations of this application can be combined with each other to form new technical solutions.

Unless otherwise specified, all technical features and optional technical features of this application can be combined with each other to form new technical solutions.

Unless otherwise specified, all steps of this application may be performed sequentially or randomly, and preferably, sequentially. For example, a method includes step (a) and step (b), which represents that the method may include step (a) and step (b) performed sequentially, or may include step (b) and step (a) performed sequentially. For example, the method mentioned may further include step (c), which represents that step (c) can be added to the method in any order. For example, the method may include step (a), step (b), and step (c), may include step (a), step (c), and step (b), or may include step (c), step (a), and step (b).

Unless otherwise specified, "comprise" and "include" mentioned in this application may indicate open inclusion or closed inclusion. For example, the terms "comprise" and "include" may indicate that other components not listed may further be comprised or included, or only listed components may be comprised or included.

Unless otherwise specified, the term "or" is inclusive in this application. For example, a phrase "A or B" means "A, B, or both A and B" More specifically, either of the following conditions satisfies the condition "A or B": A is true (or present) and B is false (or absent); A is false (or absent) and B is true (or present); and both A and B are true (or present).

In the related art, it is generally considered that gas evolution in a sodium secondary battery mainly originates from oxidation of an electrolyte by a positive electrode active material at high voltage. Therefore, in the related art, a solution of coating the positive electrode active material and forming a film on a positive electrode surface is adopted to reduce gas evolution. The applicants have discovered during research that another important factor for gas evolution in the sodium secondary battery lies in a negative electrode. Different from a lithium secondary battery, hard carbon is used as a negative electrode active material of the sodium secondary battery. The capacity contribution of hard carbon mainly includes two stages. The capacity contribution in a first stage ranges from 1.5 V to 0.1 V (vs Na/Na⁺) and originates from an adsorption process of Na⁺ at surface defects of hard carbon. The capacity contribution in a second stage is below 0.1 V (vs Na/Na⁺) and originates from a filling process of Na⁺ within micropores of hard carbon. To increase the capacity of the negative electrode, the porosity in hard carbon is typically increased in the related art. However, the potential during filling Na⁺ within the micropores of hard carbon is close to the potential (0 V) during deposition of sodium metal, which can easily cause sodium plating during charge. Precipitated sodium dendrites possess extremely high reactivity, and react rapidly with the electrolyte to generate a large amount of gas and unstable by-products. During discharge, as the negative electrode potential rises, the driving force for film formation becomes insufficient, and these unstable by-products further undergo oxidative decomposition. In addition, unstable organic by-products are easily soluble in the electrolyte, which keeps a solid electrolyte interphase (SEI film) in a continuous cycle of dissolution and repair, and exacerbates gas evolution and deteriorates cycling stability of the battery.

### [Sodium secondary battery]

Based on this, this application provides a sodium secondary battery. The sodium secondary battery includes a negative electrode sheet, where the negative electrode sheet includes a negative electrode film layer, and the negative electrode film layer contains calcium; and an electrolyte, where the electrolyte includes a first component, and the first component is a fluorinated carbonate compound.

The sodium secondary battery is a type of rechargeable battery that primarily operates through movement of sodium ions between a positive electrode and a negative electrode.

It may be understood that calcium may be introduced into the negative electrode film in any form. In some implementations, calcium is introduced into the negative electrode film layer in the form of calcium oxide or calcium salt. In some implementations, calcium is introduced into the negative electrode film layer in the form of CaO.

The fluorinated carbonate compound refers to a compound that contains a carbonate ester group (-OC(O)O-) and in which at least one hydrogen atom is replaced by a fluorine atom. The fluorinated carbonate compound may be a linear compound or a cyclic compound.

The introduction of calcium into the negative electrode film layer can induce deposition of sodium ions, help suppress formation of sodium dendrites, and reduce oxidative gas evolution of unstable components generated by the sodium dendrites at the negative electrode. This in turn reduces gas evolution at the negative electrode during discharge and lowers a volume expansion rate of the battery after high-temperature storage. However, calcium tends to form calcium hydroxide during negative electrode slurry mixing, resulting in high impedance and low initial Coulombic efficiency of the battery. This in turn reduces kinetic performance of the battery, especially charging performance of the battery at low temperatures. After being introduced into the electrolyte, the fluorinated carbonate compound can react with calcium hydroxide during cycling, to form stable CaF₂, thereby reducing the content of calcium hydroxide and mitigating the negative impact of calcium hydroxide on the negative electrode. In addition, a stable solid electrolyte interphase (an SEI film) component is formed on a negative electrode surface, thereby improving the kinetic performance and the initial Coulombic efficiency of the battery while reducing gas evolution of the unstable components at the negative electrode, and comprehensively improving cycling stability of the battery.

In some implementations, based on a total mass of the electrolyte, a mass fraction of the fluorinated carbonate compound is denoted as a, based on a total mass of the negative electrode film layer, a mass fraction of calcium in the negative electrode film layer is denoted as b, and a and b satisfy: a/b ≥ 1. In some implementations, a and b satisfy: 10000 ≥ a/b ≥ 10.

In some implementations, a value of a/b may be 1, 3.3, 5, 10, 20, 50, 100, 200, 500, 1000, 5000, 10000, or any value therebetween.

When the value of a/b is within an appropriate range, through a synergistic effect of calcium in the negative electrode and the fluorinated carbonate compound, the sodium secondary battery can effectively suppress gas evolution at the negative electrode, thereby reducing gas evolution in the battery during high-temperature storage, and improving the kinetic performance, the initial Coulombic efficiency, and the cycling stability of the battery.

In some implementations, based on the total mass of the electrolyte, the mass fraction a of the fluorinated carbonate compound ranges from 0.01% to 10%. In some implementations, based on the total mass of the electrolyte, the mass fraction a of the fluorinated carbonate compound ranges from 0.2% to 10%.

In some implementations, based on the total mass of the electrolyte, the mass fraction a of the fluorinated carbonate compound 0.01%, 0.05%, 0.1%, 0.2%, 0.5%, 1%, 2%, 3%, 4%, 5%, 6%, 7%, 8%, 9%, 10%, or any value therebetween.

When the mass fraction a of the fluorinated carbonate compound is within an appropriate range, the fluorinated carbonate compound can form a complex with calcium hydroxide, thereby reducing the content of calcium hydroxide and improving the kinetic performance and the initial Coulombic efficiency. In addition, the fluorinated carbonate compound can, together with calcium hydroxide, form stable organic and inorganic components in the negative electrode SEI film, thereby reducing gas evolution of the unstable components at the negative electrode, reducing a gas evolution rate of the battery after high-temperature storage, and comprehensively improving the cycling stability of the battery.

In some implementations, based on the total mass of the negative electrode film layer, the mass fraction b of calcium in the negative electrode film layer ranges from 1 ppm to 3000 ppm. In some implementations, based on the total mass of the negative electrode film layer, the mass fraction b of calcium in the negative electrode film layer ranges from 50 ppm to 1000 ppm.

In some implementations, based on the total mass of the negative electrode film layer, the mass fraction b of calcium in the negative electrode film layer is 1 ppm, 50 ppm, 100 ppm, 200 ppm, 300 ppm, 400 ppm, 500 ppm, 600 ppm, 700 ppm, 800 ppm, 900 ppm, 1000 ppm, 1500 ppm, 2000 ppm, 2500 ppm, 3000 ppm or any value therebetween.

### Herein, ppm refers to parts per million.

When the mass fraction b of calcium in the negative electrode film layer is within an appropriate range, it can not only mitigate the negative impact of excessively high calcium element content on the impedance and the initial Coulombic efficiency of the secondary battery, but also fully exert the effect of calcium in suppressing dendrites and reducing gas evolution, thereby improving low-temperature charging performance, the initial Coulombic efficiency, and room-temperature cycling capacity retention of the battery while reducing gas evolution. When the mass fraction b of calcium in the negative electrode film layer ranges from 50 ppm to 1000 ppm, it further improves the kinetic performance, the initial Coulombic efficiency, and the cycling stability of the battery while reducing the gas evolution rate of the battery.

In some implementations, the fluorinated carbonate compound includes a compound represented by Formula I: 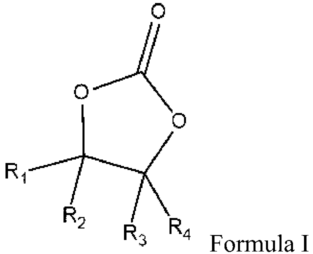 where R₁, R₂, R₃, and R₄ each independently include at least one of a hydrogen atom, a halogen atom, a C₁₋₆ hydrocarbyl group, a C₁₋₃ haloalkyl group, a C₁₋₃ alkoxy group, a C₁₋₃ haloalkoxy group, an ester group, a cyano group, a sulfonic acid group, and an isocyanate group; and at least one of R₁, R₂, R₃, and R₄ is a fluorine atom.

Herein, the term "halogen atom" refers to Group VIIA elements of the periodic table, including but not limited to: F, Cl, Br, and I.

Herein, the term "C₁₋₆ hydrocarbyl group" refers to a group that contains 1 to 6 carbon atoms and that contains carbon and hydrogen atoms. In some implementations, the C₁₋₆ hydrocarbyl group does not contain an unsaturated bond and is an alkyl group, and for example, includes, but is not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, tert-butyl, pentyl, isopentyl, neopentyl, and hexyl. In some implementations, the C1-6 hydrocarbyl group contains an unsaturated bond, and is a cycloalkyl, alkenyl, alkynyl, or aryl group, and for example, includes, but is not limited to, cyclopropyl, cyclobutyl, vinyl, 1-propenyl or 2-propenyl, phenyl, and naphthyl.

Herein, the term "C₁₋₃ haloalkyl group" refers to a C₁₋₃ alkyl group in which at least one hydrogen atom is replaced by a halogen atom, and for example, includes, but is not limited to, -CF₃, -CF₂CH₂, and -CF₂CH₂CH₃.

Herein, the term "C₁₋₃ alkoxy group" refers to a C₁₋₃ alkyl group connected to a main carbon chain via an oxygen atom, and for example, includes, but is not limited to, methoxy (CH₃O-), ethoxy (C₂H₅O-), and propoxy (C₃H₇O-).

Herein, the term "C₁₋₃ haloalkoxy group" refers to a C₁₋₃ group in which at least one hydrogen atom is replaced by a halogen atom.

Herein, the term "ester group" refers to a -COO group.

Herein, the term "cyano group" refers to a -CN group.

Herein, the term "sulfonic acid group" refers to a -SO₃H group.

Herein, the term "isocyanate group" refers to a -NCO group.

Cyclic fluorinated carbonate in which at least one of R₁, R₂, R₃, and R₄ is a fluorine atom is prone to ring-opening, to form an SEI film on the negative electrode surface, thereby reducing gas evolution in the battery and improving the kinetic performance, the initial Coulombic efficiency, and the cycling stability of the battery.

In some implementations, the fluorinated carbonate compound includes at least one of the following compounds:

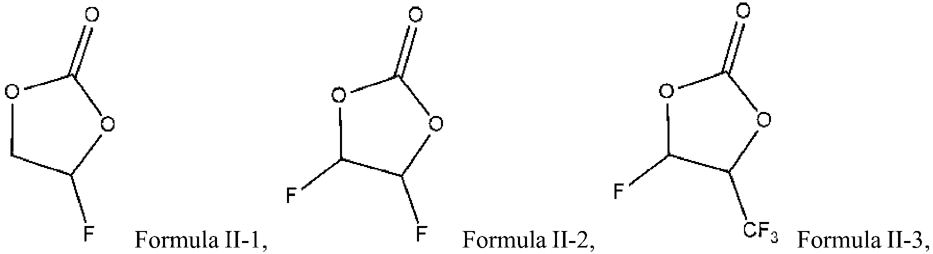

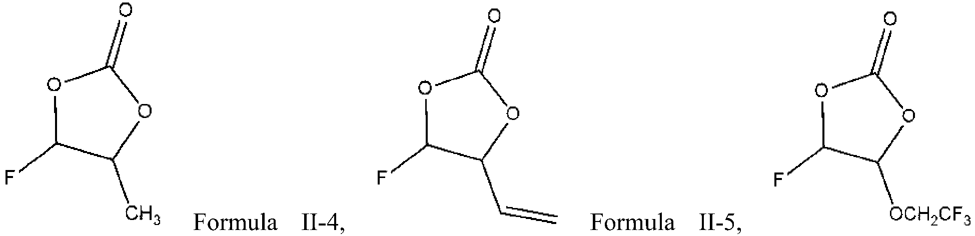

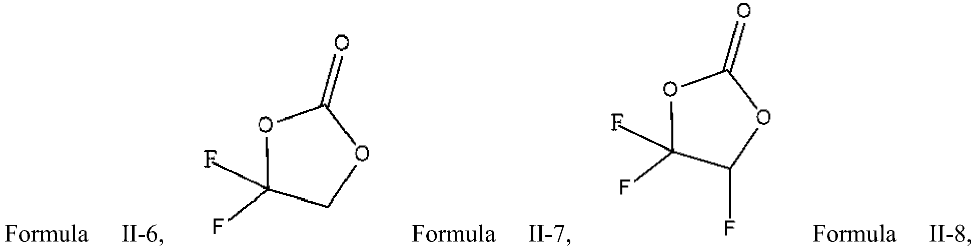

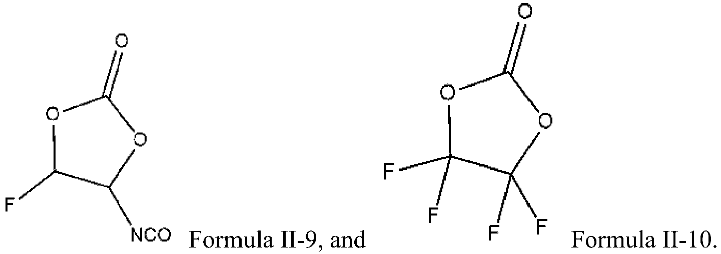

In some implementations, the electrolyte further includes a second component, and the second component is difluoro(oxalato)borate.

Herein, the term "difluoro(oxalato)borate" is a type of borate in which an anion is 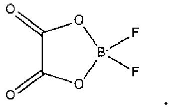 Difluoro(oxalato)borate includes, but is not limited to, lithium difluoro(oxalato)borate, sodium difluoro(oxalato)borate, magnesium difluoro(oxalato)borate, calcium difluoro(oxalato)borate, barium difluoro(oxalato)borate, aluminum difluoro(oxalato)borate, and iron difluoro(oxalato)borate.

In some implementations, difluoro(oxalato)borate includes sodium difluoro(oxalato)borate.

In some implementations, difluoro(oxalato)borate includes calcium difluoro(oxalato)borate.

A composition of the SEI film formed at the negative electrode film layer interface of the sodium secondary battery mainly includes sodium alkyl carbonate (ROCO₂Na) and sodium carbonate. However, compared with lithium alkyl carbonate, sodium alkyl carbonate has higher solubility in a solvent, which renders the SEI film of the sodium secondary battery highly unstable. As a result, continuous side reactions occur between the electrolyte and the negative electrode film layer. This is also an important reason for short service life of sodium secondary batteries.

Difluoro(oxalato)borate has a high reduction potential, and may be reduced prior to the solvent to form a film. This effectively suppresses formation of easily soluble substances such as sodium alkyl carbonate. In addition, difluoro(oxalato)borate can form a thin, dense, low-impedance SEI film containing a large amount of inorganic components such as sodium fluoride and sodium borate, which works synergistically with organic components generated from the fluorinated carbonate compound, to balance flexibility and stability of the SEI film, thereby further suppressing gas evolution and improving the kinetic performance, the initial Coulombic efficiency, and the cycle life of the sodium secondary battery.

In some implementations, based on a total mass of the electrolyte, a mass fraction of difluoro(oxalato)borate is denoted as c, a mass fraction of the fluorinated carbonate compound is denoted as a, and c and a satisfy: c/a ≥ 0.001. In some implementations, c and a satisfy: 2 ≥ c/a ≥ 0.1.

In some implementations, a value of c/a may be 0.001, 0.1, 0.8, 1, 2, 3, 4, 5, or any value therebetween.

When the value of c/a is within an appropriate range, through a synergistic effect of difluoro(oxalato)borate and fluorinated carbonate in the electrolyte, the stability and a sodium conduction property of the SEI film are improved, gas evolution in the battery during high-temperature storage is reduced, the kinetic performance and the initial Coulombic efficiency of the battery are improved, and the cycling stability of the battery is comprehensively improved.

In some implementations, based on the total mass of the electrolyte, the mass fraction c of difluoro(oxalato)borate ranges from 0.01% to 5%. In some implementations, based on the total mass of the electrolyte, the mass fraction c of difluoro(oxalato)borate ranges from 0.1% to 2%.

In some implementations, based on the total mass of the electrolyte, the mass fraction c of difluoro(oxalato)borate is 0.01%, 0.05%, 0.1%, 0.5%, 0.8%, 1%, 2%, 3%, 4%, 5%, or any value therebetween.

When the quality fraction c of difluoro(oxalato)borate is within an appropriate range, difluoro(oxalato)borate can form a complex with the fluorinated carbonate compound, which can improve the stability of the SEI film, reduce gas evolution of the unstable components on the negative electrode, and reduce a gas generation rate of a battery after high-temperature storage. In addition, the sodium conduction property of the SEI film can be improved, the kinetic performance and the initial Coulombic efficiency of the battery can be improved, and the cycling stability of the battery can be comprehensively improved.

In some implementations, a general chemical formula of difluoro(oxalato)borate is represented by Formula III:

(F₂C₂O₄B)_{y}M Formula III

where M includes one or more of Li, Na, K, Rb, Cs, Mg, Ca, Ba, Fe, Ni, and Al, and y is 1, 2, or 3.

In some implementations, the negative electrode film layer includes a negative electrode active material. The negative electrode active material includes one or more of hard carbon, sodium metal, sodium-tin alloy, and metal oxide.

In some implementations, the negative electrode active material includes hard carbon.

In some implementations, the sodium secondary battery further includes a positive electrode sheet. The positive electrode sheet includes a positive electrode active material.

In some implementations, the positive electrode active material further contains copper, and based on a total mass of the positive electrode active material, a mass fraction d of copper ranges from 0.01% to 23%. In some implementation, based on the total mass of the positive electrode active material, the mass fraction of copper ranges from 6.5% to 18%. In some implementations, based on the total mass of the positive electrode active material, the mass fraction d of copper is 0.01%, 4%, 6.5%, 10%, 13%, 15%, 18%, 20%, 23%, or any value therebetween.

The positive electrode active material containing copper has a stable structure, and can further improve the cycling stability of the battery. When the mass fraction of copper is within an appropriate range, the cycling stability of the battery is improved without the risk of copper being converted into Cu³⁺ at high voltage. This avoids accelerated decomposition of the electrolyte due to high oxidizability of Cu³⁺, thereby preventing drastic aggravation of gas evolution in the battery. When the mass fraction of copper is within the range of 6.5% to 18%, low gas evolution, high kinetic performance, high initial Coulombic efficiency, and high cycling stability of the secondary battery can further be achieved.

In some implementations, the positive electrode active material may be a positive electrode active material known in the art for batteries. For example, the positive electrode active material may include at least one of the following materials: a Prussian blue analog, sodium-containing phosphate, sodium-containing transition metal oxide, and respective modified compounds thereof. However, this application is not limited to such materials, and another conventional material that can be used as the positive electrode active material for batteries may alternatively be used. These positive electrode active materials may be used either individually alone or in combination of two or more. The Prussian blue analog is NaxP[R(CN)₆]_{δ}·zH₂O, where P and R are each independently selected from at least one of transition metal elements, and 0 < x ≤ 2, 0 < δ ≤ 1, and 0 ≤ z ≤ 10. The sodium-containing phosphate is Na_{b}Me_{c}(PO₄)_{d}O₂X, where A is one or more of H, Li, Na, K, and NH₄, Me is one or more of Ti, Cr, Mn, Fe, Co, Ni, V, Cu, and Zn, X is one or more of F, Cl, and Br, 0 < b ≤ 4, 0 < c ≤ 2, and 1 ≤ d ≤ 3. Sodium-containing transition metal oxide is NaₐM_{b}N_{c}Fe_{d}MnₑO₂, where M and N include at least one of Sc, Ti, V, Cr, Co, Ni, Cu, Zn, Zr, Nb, Mo, Sn, Hf, Ta, W, and Pb, 0.05 ≤ b ≤ 0.2, 0.2 ≤ c ≤ 0.3, 0.2 ≤ d ≤ 0.3, 0.3 ≤ e ≤ 0.4, and 0.75 ≤ a/(b+c+d+e) ≤ 1.

In some implementations, the positive electrode active material includes sodium transition metal oxide.

In some implementations, sodium transition metal oxide includes NaₘCuₙXₒFeₚMn_{q}O₂₋ₛ, where X includes one or more of Li, Be, B, Mg, Al, K, Ca, Ti, Co, Ni, Zn, Ga, Sr, Y, Nb, Mo, In, Sn, Fe, and Ba, 0 ≤ m ≤ 0.5, 0 ≤ n ≤ 0.5, 0 ≤ o < 0.5, 0 ≤ p ≤ 0.5, 0 < q ≤ 0.68, n+o+p+q=1, and 0 ≤ s < 0.2. In some implementations, sodium transition metal oxide includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

Sodium transition metal oxide (the positive electrode active material) possess a high voltage, and contains anionic oxygen that contributes to capacity while generating a large amount of protonic hydrogen. This accelerates the oxidative gas evolution of the unstable components at the negative electrode, leading to severe gas evolution on the negative electrode side. Through a synergistic effect of calcium in the negative electrode film layer in the negative electrode sheet and the fluorinated carbonate compound in the electrolyte that are provided in the embodiments of this application, gas evolution in the battery can be effectively reduced, and the kinetic performance, the initial Coulombic efficiency, and the cycling stability of the battery can be improved while improving the capacity and the energy density of the battery.

In some implementations, the electrolyte further includes a third component. The third component is one or more of vinylene carbonate, vinyl ethylene carbonate, 1,3-propane sultone, prop-1-ene-1,3-sultone, ethylene sulfate, maleic anhydride, succinic anhydride, triallyl phosphate, sodium tetrafluoro(oxalato)phosphate, sodium difluorobis(oxalato)phosphate, sodium difluorophosphate, and sodium fluorosulfonate.

The composition of the SEI film formed at the negative electrode interface of the sodium secondary battery mainly includes sodium alkyl carbonate and sodium carbonate. However, compared with lithium alkyl carbonate, sodium alkyl carbonate has higher solubility in an electrolyte solvent, which renders the SEI film of the sodium secondary battery highly unstable. As a result, continuous side reactions occur between the electrolyte and the negative electrode, leading to poor cycling performance of the second battery. The second component containing unsaturated functional groups can be reduced prior to the solvent to form a film at the negative electrode, and cooperates with the fluorinated carbonate compound and calcium in the negative electrode to jointly suppress formation of easily soluble substances such as sodium alkyl carbonate, thereby reducing gas evolution in the battery, and improving the kinetic performance, the initial Coulombic efficiency, and the cycling stability of the battery.

In some implementations, based on the total mass of the electrolyte, a mass fraction of the third component ranges from 0.01% to 10%. In some implementations, based on the total mass of the electrolyte, a mass fraction of the third component ranges from 0.1% to 5%.

In some implementations, based on the total mass of the electrolyte, the mass fraction of the third component is 0.01%, 0.1%, 1%, 2%, 3%, 4%, 5%, 6%, 7%, 8%, 9%, 10%, or any value therebetween.

When the mass fraction of the third component is within the foregoing interval, a thickness of the SEI film can be controlled while mitigating gas evolution in the battery, thereby achieving both low impedance and low gas evolution of the battery, and improving the kinetic performance, the initial Coulombic efficiency, and the cycling stability of the battery.

In some implementations, the electrolyte includes electrolyte salt. Electrolyte salt is selected from at least one of NaPF₆, NaBF₄, NaN(SO₂F)₂ (NaFSI), NaClO₄, NaAsF₆, NaB(C₂O₄)₂ (NaBOB), NaBF₂(C₂O₄) (NaDFOB), NaN(SO₂RF)₂, and NaN(SO₂F)(SO₂RF), where RF represents C_{b}F_{2b+1}, and b is an integer in a range of 1 to 10. In some implementations, b may be an integer in a range of 1 to 3. In some implementations, electrolyte salt is selected from one or more of NaPF₆, NaClO₄, NaN(SO₂F)₂, NaN(CF₃SO₂)₂, NaB(C₂O₄)₂, and NaBF₂(C₂O₄). In some implementations, electrolyte salt is selected from one or more of NaPF₆, NaN(SO₂RF)₂, and NaBF₂(C₂O₄). In some implementations, RF is -CF₃, -C₂F₅, or -CF₂CF₂CF₃.

In some implementations, the electrolyte includes a solvent. The solvent includes at least one of chain carbonate, chain carboxylic ester, cyclic carbonate, an ether solvent, a sulfone solvent, and a nitrile solvent. In some implementations, chain carbonate includes at least one of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some implementations, chain carbonate includes at least one of dimethyl carbonate (DMC), diethyl carbonate (DEC), ethyl methyl carbonate (EMC), and methyl propyl carbonate (MPC). In some implementations, chain carboxylic ester includes at least one of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some implementations, chain carboxylic ester includes at least one of methyl propionate (MP), ethyl propionate (EP), propyl propionate (PP), methyl acetate (MA), ethyl acetate (EA), and propyl acetate (PA). In some implementations, the ether solvent includes at least one of 1,3-dioxolane (DOL), tetrahydrofuran (THF), 2-methyltetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

### [Positive electrode sheet]

A positive electrode sheet typically includes a positive electrode current collector and a positive electrode film layer disposed on at least one surface of the positive electrode current collector. The positive electrode film layer includes a positive electrode active material.

For example, the positive electrode current collector has two opposite surfaces in a thickness direction of the positive electrode current collector, and the positive electrode film layer is disposed on either or both of the two opposite surfaces of the positive electrode current collector.

In some implementations, the positive electrode current collector may be a metal foil or a composite current collector. For example, in a case of a metal foil, an aluminum foil may be used. The composite current collector may include a polymer material base layer and a metal layer formed on at least one surface of the polymer material base layer. The composite current collector may be formed by depositing a metal material (such as aluminum, aluminum alloy, nickel, nickel alloy, titanium, titanium alloy, silver, or silver alloy) onto a polymer substrate (a substrate such as polypropylene (PP), polyethylene terephthalate (PET), polybutylene terephthalate (PBT), polystyrene (PS), or polyethylene (PE)).

In some implementations, the positive electrode film layer includes a binder. For example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin.

In some implementations, the positive electrode film layer further optionally includes a conductive agent. For example, the conductive agent may include at least one of superconducting carbon, acetylene black, carbon black, Ketjen black, a carbon dot, a carbon nanotube, graphene, and carbon nanofibers.

In some implementations, the positive electrode sheet can be prepared by the following method: dispersing the foregoing components for preparing the positive electrode sheet, such as the positive electrode active material, the conductive agent, the binder, and any other components, in a solvent (such as N-methylpyrrolidone) to form a positive electrode slurry; and coating the positive electrode slurry onto the positive electrode current collector, followed by drying, cold pressing, and other processes, to obtain the positive electrode sheet.

### [Negative electrode sheet]

A negative electrode sheet includes a negative electrode current collector and a negative electrode film layer disposed on at least one surface of the negative electrode current collector. The negative electrode film layer includes a negative electrode active material.

For example, the negative electrode current collector has two opposite surfaces in a thickness direction of the negative electrode current collector, and the negative electrode film layer is disposed on either or both of the two opposite surfaces of the negative electrode current collector.

In some implementations, the negative electrode current collector may be a metal foil or a composite current collector. For example, in the case of a metal foil, a copper foil may be used. The composite current collector may include a polymer material base layer or a metal layer formed on at least one surface of the polymer material base layer. The composite current collector may be formed by depositing a metal material (such as copper, copper alloy, aluminum, aluminum alloy, nickel, nickel alloy, titanium, titanium alloy, silver, or silver alloy) onto a polymer material substrate (a substrate such as polypropylene (PP), polyethylene terephthalate (PET), polybutylene terephthalate (PBT), polystyrene (PS), or polyethylene (PE)).

In some implementations, the negative electrode film layer includes a binder. For example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer includes a conductive agent. For example, the conductive agent may be selected from at least one of superconducting carbon, acetylene black, carbon black, Ketjen black, a carbon dot, a carbon nanotube, graphene, and carbon nanofibers.

In some implementations, the negative electrode film layer further optionally includes another adjuvant, such as a thickener (such as sodium carboxymethyl cellulose (CMC-Na)).

In some implementations, the negative electrode sheet may be prepared by the following method: dispersing the foregoing components for preparing the negative electrode sheet, such as the negative electrode active material, the conductive agent, the binder, and any other components, in a solvent (such as deionized water) to form a negative electrode slurry; and coating the negative electrode slurry onto the negative electrode current collector, followed by drying, cold pressing, and other processes, to obtain the negative electrode sheet.

### [Separator]

In some implementations, the secondary battery further includes a separator. A type of the separator is not particularly limited in this application, and any well-known porous-structure separator with good chemical stability and mechanical stability may be selected.

In some implementations, a material of the separator may be selected from at least one from glass fiber, non-woven fabric, polyethylene, polypropylene, and polyvinylidene fluoride. The separator may be a single-layer thin film or a multi-layer composite film, and is not particularly limited. When the separator is a multi-layer composite film, materials of layers may be the same or different, and are not particularly limited.

In some implementations, the positive electrode sheet, the negative electrode sheet, and the separator may be formed into an electrode assembly by a winding process or a stacking process.

In some implementations, the secondary battery may include an outer packaging. The outer packaging may be used for encapsulating the foregoing electrode assembly and the electrolyte.

In some implementations, the outer packaging of the secondary battery may be a hard case such as a hard plastic case, an aluminum case, or a steel case. The outer packaging of the secondary battery may alternatively be a pouch, such as a bag-type soft pouch A material of the soft packaging may be plastic, and examples of plastic may include polypropylene, polybutylene terephthalate, polybutylene succinate, and the like.

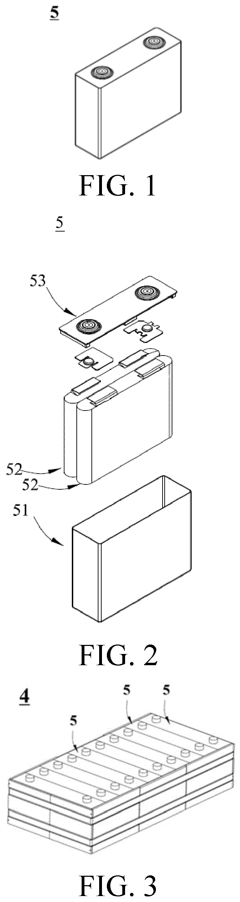

In this application, a shape of the sodium secondary battery includes, but is not limited to, a cylindrical shape, a prismatic shape, or any other shape. For example, FIG. 1 shows an exemplary sodium secondary battery 5 with a prismatic structure.

In some implementations, referring to FIG. 2, the outer packaging may include a case 51 and a cover plate 53. The case 51 may include a bottom plate and side plates connected to the bottom plate. The bottom plate and the side plates form an accommodating cavity. The housing 51 has an opening in communication with the accommodating cavity, and the cover plate 53 is capable of covering the opening to seal the accommodating cavity. The positive electrode sheet, the negative electrode sheet, and the separator may be formed into an electrode assembly 52 by a winding process or a stacking process. The electrode assembly 52 is encapsulated within the accommodating cavity. The electrolyte infiltrates in the electrode assembly 52. The sodium secondary battery 5 may include one or more electrode assemblies 52. A specific quantity can be selected by a person skilled in the art according to actual requirements.

In some implementations, the sodium secondary battery may be assembled into a battery module. The battery module may include one or more sodium secondary batteries. A specific quantity may be selected by a person skilled in the art according to application and capacity of the battery module.

FIG. 3 shows an exemplary battery module 4. Referring to FIG. 3, in the battery module 4, a plurality of sodium secondary batteries 5 may be sequentially arranged in a length direction of the battery module 4. Alternatively, the plurality of sodium secondary batteries may be arranged in any other manner. Further, the plurality of sodium secondary batteries 5 may be fixed through fasteners.

Optionally, the battery module 4 may further include an outer case with an accommodating space. The plurality of secondary batteries 5 may be accumulated in the accommodating space.

In some implementations, the battery module may further be assembled into a battery pack. The battery pack may include one or more battery modules. A specific quantity may be selected by a person skilled in the art according to application and capacity of the battery pack.

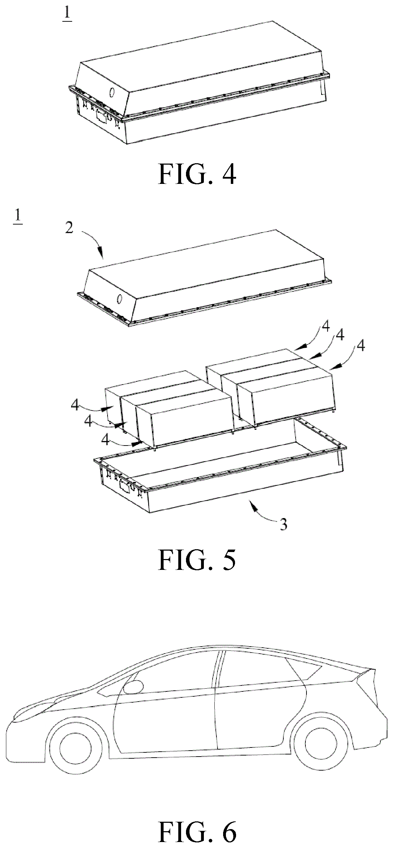

FIG. 4 and FIG. 5 show an exemplary battery pack 1. Referring to FIG. 4 and FIG. 5, the battery pack 1 may include a battery box and a plurality of battery modules 4 arranged in the battery box. The battery box includes an upper box body 2 and a lower box body 3. The upper box body 2 is capable of covering the lower box body 3, to form an enclosed space for accommodating the battery modules 4. The plurality of battery modules 4 may be disposed in the battery box in any manner.

In addition, this application provides an electric device. The electric device includes at least one of the sodium secondary battery, the battery module, and the battery pack provided in this application. The sodium secondary battery, the battery module, or the battery pack may be used as a power supply of the electric device, or may alternatively be used as an energy storage unit of the electric device. The electric device may include, but is not limited to, a mobile device (such as a mobile phone or a notebook computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

The sodium secondary battery, the battery module, or the battery pack may be selected for the electric device according to usage requirements of the electric device.

FIG. 6 shows an exemplary electric device. The electric device is a battery electric vehicle, a hybrid electric vehicle, a plug-in hybrid electric vehicle, or the like. In order to meet requirements of the electric device for high power and high energy density of the sodium secondary battery, a battery pack or a battery module may be used.

For another example, the device may be a mobile phone, a table computer, or a notebook computer. The device typically requires a thin and light design, and the sodium secondary battery may be used as a power supply of the device.

### Examples

The following describes examples of this application. The examples described below are exemplary, and are only intended to explain this application rather than being construed as a limitation on this application. The examples in which specific technologies or conditions are not indicated are carried out in accordance with the technologies or conditions described in the literature in the art or in accordance with the product specification. The reagents or instruments for which the manufacturer is not specified are conventional commercially available products.

### I. Preparation method

### Example 1:

### Preparation of an electrolyte

Ethylene carbonate (EC) and ethyl methyl carbonate (EMC) were mixed in a mass ratio of 30: 70 in an argon atmosphere glovebox (with an H₂O content less than 10 ppm and an O₂ content less than 1 ppm), 1 M NaPF₆ sodium salt was dissolved, fluoroethylene carbonate was added, and the mixture was stirred uniformly, to prepare an electrolyte. Based on a total mass of the electrolyte, a mass fraction of fluoroethylene carbonate was 1%.

### (2) Preparation of a positive electrode active material

Preparation of Na_{7/9}Cu_{2/9}Fe_{1/9}Mn_{2/3}O₂: 0.39 mol of Na₂CO₃, 0.22 mol of CuO, 0.06 mol of Fe₂O₃, and 0.67 mol of MnO₂ precursors were ball-milled in a ball mill using ethanol as a dispersant for 12 h, and after being dried, the uniformly mixed powder was pressed into pellets at 20 MPa and sintered at 900°C for 12 h. The sintered powder was then quickly transferred into a glovebox for storage.

### (3) Preparation of a positive electrode sheet

The positive active material Na_{7/9}Cu_{2/9}Fe_{1/9}Mn_{2/3}O₂, a conductive agent acetylene black, and a binder polyvinylidene fluoride (PVDF) were thoroughly stirred and uniformly mixed in a weight ratio of 90: 5: 5 in an N-methylpyrrolidone solvent system, to obtain a positive electrode slurry. The positive electrode slurry was uniformly coated at a density of 0.28 g (dry weight)/1540.25 mm² onto a positive current collector aluminum foil with a thickness of 13 µm. After being air-dried at room temperature, the aluminum foil was transferred into an oven at 120°C and dried for 1 h, and then subjected to cold pressing and slitting to obtain a positive electrode sheet.

### (4) Preparation of a negative electrode sheet

A negative electrode active material hard carbon, a conductive agent acetylene black, a binder styrene-butadiene rubber (SBR), and a thickener sodium carboxymethyl cellulose (CMC-Na) were thoroughly mixed and uniformly mixed in a weight ratio of 90: 4: 4: 2 in a deionized water solvent system, and a particular amount of CaO was added, to make a mass fraction of calcium in the dry slurry (namely, a total mass of the negative electrode active material hard carbon, the conductive agent acetylene black, the binder styrene-butadiene rubber (SBR), the thickener sodium carboxymethyl cellulose (CMC-Na), and CaO) equal to 100 ppm, to obtain a negative electrode slurry. The negative electrode slurry was uniformly coated at a density of 0.14 g (dry weight)/1540.25 mm² onto a negative electrode current collector copper foil with a thickness of 13 µm. After being air-dried at room temperature, the copper foil was transferred into an oven at 120°C and dried for 1 h, and then subjected to cold pressing and slitting to obtain a negative electrode sheet.

### (5) Separator

A polyethylene (PE) porous polymer thin film with a thickness of 9 µm was used as a separator.

### (6) Preparation of a battery

The positive electrode sheet, the separator, and the negative electrode sheet were stacked sequentially, with the separator placed between the positive electrode sheet and the negative electrode sheet to isolate the positive electrode sheet from the negative electrode sheet, and then wound to obtain a bare cell, and tabs are welded. The bare cell was placed in an outer packaging, and the foregoing prepared electrolyte was filled into the dried cell. Subsequently, processes such as sealing, standing, formation, shaping, and capacity testing were carried out to obtain a sodium secondary battery product of Example 1.

Preparation methods of sodium secondary batteries of Example 2 to Example 4 were substantially the same as the preparation method of Example 1, and a difference lay in that the type of the fluorinated carbonate compound was adjusted. For specific parameters, refer to Table 1.

Preparation methods of sodium secondary batteries of Example 5 to Example 8 were substantially the same as the preparation method of Example 1, and a difference lay in that the mass fraction of the fluorinated carbonate compound, based on the electrolyte, was adjusted. For specific parameters, refer to Table 1.

Preparation methods of sodium secondary batteries of Example 9 to Example 12 were substantially the same as the preparation method of Example 1, and a difference lay in that the mass fraction of calcium in the negative electrode film layer was adjusted by adding different amounts of CaO to the negative electrode slurry. For specific parameters, refer to Table 2.

Preparation methods of sodium secondary batteries of Example 13 to Example 18 were substantially the same as the preparation method of Example 1, and a difference lay in that a second component, namely, sodium difluoro(oxalato)borate, was added to the electrolyte, and a mass fraction of sodium difluoro(oxalato)borate and/or the mass fraction of the fluorinated carbonate compound was adjusted. For specific parameters, refer to Table 1.

A preparation method of a sodium secondary battery of Example 19 was substantially the same as the preparation method of Example 14, a difference lay in that the type of the second component was adjusted. For specific parameters, refer to Table 1.

Preparation methods of sodium secondary batteries of Example 20 to Example 23 were substantially the same as the preparation method of Example 1, and a difference lay in that the preparation process of the positive electrode active material and the preparation process of the positive electrode sheet were adjusted to adjust the mass fraction of copper in the positive electrode active material. For specific parameters, refer to Table 2. The preparation process was as follows:

In Example 20, a mass fraction of copper in a positive electrode active material in a positive electrode sheet was 0%, and a preparation method was as follows:

Preparation of Na_{1/2}Fe_{1/2}Mn_{1/2}O₂: 0.25 mol of Na₂CO₃, 0.25 mol of Fe₂O₃, and 0.5 mol of MnO₂ precursors were ball-milled in a ball mill using ethanol as a dispersant for 12 h, and after being dried, the uniformly mixed powder was pressed into pellets at 20 MPa and sintered at 900°C for 12 h. The sintered powder was then quickly transferred into a glovebox for storage.

The positive electrode active material Na_{1/2}Fe_{1/2}Mn_{1/2}O₂, a conductive agent acetylene black, and a binder polyvinylidene fluoride (PVDF) were thoroughly stirred and uniformly mixed in a weight ratio of 90: 5: 5 in an N-methylpyrrolidone solvent system, to obtain a positive electrode slurry. The positive electrode slurry was uniformly coated at a density of 0.28 g (dry weight)/1540.25 mm² onto a positive electrode current collector aluminum foil with a thickness of 13 µm. After being air-dried at room temperature, the aluminum foil was transferred into an oven at 120°C and dried for 1 h, and then subjected to cold pressing and slitting to obtain a positive electrode sheet.

In Example 21, a mass fraction of copper in a positive electrode active material in a positive electrode sheet was 6.5%, and a preparation method was as follows:

A positive active material (including 50 wt% Na_{1/2}Fe_{1/2}Mn_{1/2}O₂ and including 50 wt% Na_{7/9}Cu_{2/9}Fe_{1/9}Mn_{2/3}O₂), a conductive agent acetylene black, and a binder polyvinylidene fluoride (PVDF) were thoroughly stirred and uniformly mixed in a weight ratio of 90: 5: 5 in an N-methylpyrrolidone solvent system, to obtain a positive electrode slurry. The positive electrode slurry was uniformly coated at a density of 0.28 g (dry weight)/1540.25 mm² onto a positive electrode current collector aluminum foil with a thickness of 13 µm. After being air-dried at room temperature, the aluminum foil was transferred into an oven at 120°C and dried for 1 h, and then subjected to cold pressing and slitting to obtain a positive electrode sheet.

In Example 22, a mass fraction of copper in a positive electrode active material in a positive electrode sheet was 23%, and a preparation method was as follows:

Preparation of Na_{9/10}Cu_{2/5}Fe_{1/10}Mn_{1/2}O₂: 0.45 mol of Na₂CO₃, 0.4 mol of CuO, 0.05 mol of Fe₂O₃, and 0.5 mol of MnO₂ precursors were ball-milled in a ball mill using ethanol as a dispersant for 12 h, and after being dried, the uniformly mixed powder was pressed into pellets at 20 MPa and sintered at 900°C for 12 h. The sintered powder was then quickly transferred into a glovebox for storage.

The positive electrode active material Na_{9/10}Cu_{2/5}Fe_{1/10}Mn_{1/2}O₂, a conductive agent acetylene black, and a binder polyvinylidene fluoride (PVDF) were thoroughly stirred and uniformly mixed in a weight ratio of 90: 5: 5 in an N-methylpyrrolidone solvent system, to obtain a positive electrode slurry. The positive electrode slurry was uniformly coated at a density of 0.28 g (dry weight)/1540.25 mm² onto a positive electrode current collector aluminum foil with a thickness of 13 µm. After being air-dried at room temperature, the aluminum foil was transferred into an oven at 120°C and dried for 1 h, and then subjected to cold pressing and slitting to obtain a positive electrode sheet.

In Example 23, a mass fraction of copper in a positive electrode active material in a positive electrode sheet was 18%, and a preparation method was as follows:

A positive active material (including 50 wt% Na_{7/9}Cu_{2/9}Fe_{1/9}Mn_{2/3}O₂ and 50 wt% Na_{9/10}Cu_{2/5}Fe_{1/10}Mn_{1/2}O₂), a conductive agent acetylene black, and a binder polyvinylidene fluoride (PVDF) were thoroughly stirred and uniformly mixed in a weight ratio of 90: 5: 5 in an N-methylpyrrolidone solvent system, to obtain a positive electrode slurry. The positive electrode slurry was uniformly coated at a density of 0.28 g (dry weight)/1540.25 mm² onto a positive electrode current collector aluminum foil with a thickness of 13 µm. After being air-dried at room temperature, the aluminum foil was transferred into an oven at 120°C and dried for 1 h, and then subjected to cold pressing and slitting to obtain a positive electrode sheet.

Preparation methods of sodium secondary batteries of Example 24 to Example 26 were substantially the same as the preparation method of Example 1, and a difference lay in that a third component was further added to the electrolyte. For specific parameters, refer to Table 1.

### Comparative Example 1

Compared with Example 1, Comparative Example 1 includes an electrolyte that does not include a fluorinated carbonate compound. For specific parameters, refer to Table 1.

### Comparative Example 2

Compared with Example 5, Compared Example 2 includes a negative electrode film layer does not contain calcium. For specific parameters, refer to Table 1.

### Comparative Example 3

Compared with Example 1, Comparative Example 3 includes an electrolyte that does not include a fluorinated carbonate compound and a negative electrode film layer that does not include calcium. For specific parameters, refer to Table 1.

### II. Battery performance test

### High-temperature storage volume change rate

At 25°C, the sodium secondary batteries prepared in the examples and the comparative examples were left to stand for 5 minutes, charged at a constant current of 1C to 4.0 V, charged at a constant voltage until the current was less than or equal to 0.05C, left to stand for 5 minutes, and discharged at a constant current of 1C to 1.5 V, and a volume V1 of the battery was measured by a water displacement method. Then, the battery was placed in an oven at 60°C, stored for two months, and taken out, and the volume was tested and recorded as V2. A volume change rate of the battery was equal to (V2-V1)/V1×100%.

### 2. Low-temperature charging performance at -10°C

A three-electrode battery containing a reference electrode was prepared. The reference electrode was sodium vanadium phosphate. The battery was charged at 25°C at a constant current of 0.1C to a voltage of 4.0 V, charged at a constant voltage until the current was less than or equal to 0.05C, left to stand for 5 minutes, and then discharged at a constant current of 1C to 1.5 V. A discharge capacity was recorded as C1. Then, the battery was left to stand in an environment at 10°C for 2 h, charged at constant current of 0.1C to a voltage of 4.0 V, and a charging capacity obtained before a negative electrode potential reached -3.377 V relative to the reference electrode was obtained and recorded as C2. A charging ability of the battery at -10°C was equal to C2/C1×100%.

### 3. Measurement of a mass fraction of calcium in a negative electrode film layer

The mass fraction of calcium in the negative electrode film layer was measured in accordance to the general rule EPA 6010D-2014 and by the inductively coupled plasma atomic emission spectrometry method. The mass fraction of calcium in the negative electrode film layer was obtained by dividing a mass of calcium in a sample of the negative electrode film layer by a mass of the sample of the negative electrode film layer.

### 4. Measurement of a mass fraction of copper in a positive active material

The mass fraction of copper in the positive electrode active material was measured in accordance with the general rule EPA 6010D-2014 and by the inductively coupled atomic emission spectrometry method. The mass fraction of copper in the positive electrode active material was obtained by dividing a mass of copper in a sample of the positive electrode active material by a mass of the sample of the positive electrode active material.

### 5. Initial Coulombic efficiency (ICE) test

After the battery was filled with liquid, at 25°C, the prepared battery was charged to at a constant current of 0.1C to 4.0 V, and charged at a constant voltage of 4.0 V until the current dropped to 0.05C. This was recorded as the first charge capacity C1. After being left to stand for 5 min, the battery was discharged at a constant current of 0.1C to 1.5 V. This was recorded as the first discharge capacity (C2). The initial Coulombic efficiency was equal to C2/C1×100%.

### 6. Battery cycle capacity retention rate test

At 25°C, the prepared battery was charged at a constant current of 1C to 4.0 V, charged at a constant voltage of 4.0 V until the current dropped to 0.05C, left to stand for 5 min, and discharged at a constant current of 1C to 1.5 V. This was a first charge/discharge cycle of the battery, and at this time, a discharge capacity was recorded as a discharge capacity (C0) of the battery after the first cycle. The foregoing steps were repeated for the same battery. A discharge capacity of the battery after 400 cycles was recorded as C1. A capacity retention rate after 400 cycles was equal to C1/C0×100%.

### III. Analysis of test results of examples and comparative examples

The batteries of the examples and the comparative examples were separately prepared by the foregoing methods, and tested for various performance parameters. The results are shown in tables below.

**Table 1**

| Number | Electrolyte | | | | | | |
|---|---|---|---|---|---|---|---|
| | Fluorinated carbonate compound | | Difluoro(oxalato)borate | | Third component | | c/a |
| | Substance | Mass fraction a/% | Substance | Mass fraction c/% | Substance | Mass fraction % | |
| Example 1 | Formula II-1 | 1 | / | / | / | / | / |
| Example 2 | Formula II-2 | 1 | / | / | / | / | / |
| Example 3 | Formula II-5 | 1 | / | / | / | / | / |
| Example 4 | Formula II-10 | 1 | / | / | / | / | / |
| Example 5 | Formula II-1 | 0.01 | / | / | / | / | / |
| Example 6 | Formula II-1 | 0.2 | / | / | / | / | / |
| Example 7 | Formula II-1 | 5 | / | / | / | / | / |
| Example 8 | Formula II-1 | 10 | / | / | / | / | / |
| Example 9 | Formula II-1 | 1 | / | / | / | / | / |
| Example 10 | Formula II-1 | 1 | / | / | / | / | / |
| Example 11 | Formula II-1 | 1 | / | / | / | / | / |
| Example 12 | Formula II-1 | 1 | / | / | / | / | / |
| Example 13 | Formula II-1 | 1 | Sodium difluoro(oxalato)borate | 0.1 | / | / | 0.1 |
| Example 14 | Formula II-1 | 1 | Sodium difluoro(oxalato)borate | 0.8 | / | / | 0.8 |
| Example 15 | Formula II-1 | 1 | Sodium difluoro(oxalato)borate | 2 | / | / | 2 |
| Example 16 | Formula II-1 | 1 | Sodium difluoro(oxalato)borate | 5 | / | / | 5 |
| Example 17 | Formula II-1 | 0.01 | Sodium difluoro(oxalato)borate | 5 | / | / | 500 |
| Example 18 | Formula II-1 | 10 | Sodium difluoro(oxalato)borate | 0.01 | / | / | 0.001 |
| Example 19 | Formula II-1 | 1 | Calcium difluoro(oxalato)borate | 0.8 | / | / | 0.8 |
| Example 20 | Formula II-1 | 1 | / | / | / | / | / |
| Example 21 | Formula II-1 | 1 | / | / | / | / | / |
| Example 22 | Formula II-1 | 1 | / | / | / | / | / |
| Example 23 | Formula II-1 | 1 | / | / | / | / | / |
| Example 24 | Formula II-1 | 1 | Sodium difluoro(oxalato)borate | 0.8 | Triallyl phosphate | 0.5 | / |
| Example 25 | Formula II-1 | 1 | Sodium difluoro(oxalato)borate | 0.8 | Maleic anhydride | 0.5 | / |
| Example 26 | Formula II-1 | 1 | Sodium difluoro(oxalato)borate | 0.8 | Sodium fluorosulfonate | 0.5 | / |
| Comparative Example 1 | / | / | / | / | / | / | / |
| Comparative Example 2 | Formula II-1 | 0.01 | / | / | / | / | / |
| Comparative Example 3 | / | / | / | / | / | / | / |

**Table 2**

| Number | Negative electrode sheet | | Positive electrode sheet |
|---|---|---|---|
| | Mass fraction b of Ca/ppm | a/b | Mass fraction d of Cu/% |
| Example 1 | 100 | 100 | 13 |
| Example 2 | 100 | 100 | 13 |
| Example 3 | 100 | 100 | 13 |
| Example 4 | 100 | 100 | 13 |
| Example 5 | 100 | 1 | 13 |
| Example 6 | 100 | 20 | 13 |
| Example 7 | 100 | 500 | 13 |
| Example 8 | 100 | 1000 | 13 |
| Example 9 | 1 | 10000 | 13 |
| Example 10 | 50 | 200 | 13 |
| Example 11 | 1000 | 10 | 13 |
| Example 12 | 3000 | 3.33 | 13 |
| Example 13 | 100 | 100 | 13 |
| Example 14 | 100 | 100 | 13 |
| Example 15 | 100 | 100 | 13 |
| Example 16 | 100 | 100 | 13 |
| Example 17 | 100 | 1 | 13 |
| Example 18 | 100 | 1000 | 13 |
| Example 19 | 100 | 100 | 13 |
| Example 20 | 100 | 100 | 0 |
| Example 21 | 100 | 100 | 6.5 |
| Example 22 | 100 | 100 | 23 |
| Example 23 | 100 | 100 | 18 |
| Example 24 | 100 | 100 | 13 |
| Example 25 | 100 | 100 | 13 |
| Example 26 | 100 | 100 | 13 |
| Comparative Example 1 | 100 | / | 13 |
| Comparative Example 2 | 0 | / | 13 |
| Comparative Example 3 | 0 | / | 13 |

**Table 3**

| Number | Battery | | | |
|---|---|---|---|---|
| | Volume expansion rate of battery after high-temperature storage/% | Charging performance at -10°C/% | Initial Coulombic efficiency/% | Cycle capacity retention rate/% |
| Example 1 | 17.7 | 85.1 | 85.2 | 86.2 |
| Example 2 | 16.6 | 86.5 | 85.3 | 86.5 |
| Example 3 | 16.3 | 87.1 | 85.3 | 86.7 |
| Example 4 | 15.6 | 87.8 | 85.4 | 87.1 |
| Example 5 | 39.2 | 74.7 | 73.4 | 65.4 |
| Example 6 | 19.8 | 82.1 | 81.2 | 80.2 |
| Example 7 | 15.1 | 85.5 | 85.3 | 86.5 |
| Example 8 | 14.3 | 84.5 | 85.1 | 85.5 |
| Example 9 | 19.2 | 83.2 | 84.8 | 85.7 |
| Example 10 | 18.4 | 84.7 | 85.1 | 86.0 |
| Example 11 | 16.5 | 85.3 | 84.5 | 86.5 |
| Example 12 | 15.1 | 81.3 | 80.1 | 82.3 |
| Example 13 | 17.4 | 85.3 | 85.4 | 86.4 |
| Example 14 | 16.2 | 85.8 | 85.7 | 86.8 |
| Example 15 | 15.8 | 85.6 | 85.5 | 86.5 |
| Example 16 | 17.7 | 84.2 | 84.5 | 84.5 |
| Example 17 | 24.7 | 78.1 | 77.2 | 75.1 |
| Example 18 | 14.1 | 84.6 | 85.3 | 85.6 |
| Example 19 | 15.8 | 85.9 | 85.8 | 87.2 |
| Example 20 | 16.1 | 86.4 | 85.7 | 84.1 |
| Example 21 | 16.6 | 85.8 | 85.5 | 85.5 |
| Example 22 | 19.9 | 83.4 | 84.2 | 86.9 |
| Example 23 | 18.2 | 84.6 | 84.8 | 86.7 |
| Example 24 | 15.1 | 86.4 | 85.9 | 87.9 |
| Example 25 | 15.3 | 86.5 | 85.8 | 87.7 |
| Example 26 | 14.2 | 86.8 | 86.4 | 88.6 |
| Comparative Example 1 | 43.6 | 74.3 | 70.1 | 63.8 |
| Comparative Example 2 | 42.2 | 74.5 | 73 | 65.1 |
| Comparative Example 3 | 45.2 | 72.5 | 69.8 | 61.9 |

It can be seen from the foregoing results that the sodium secondary batteries of Example 1 to Example 26 all include the negative electrode sheet and the electrolyte, the negative electrode sheet includes the negative electrode film layer, and the negative electrode film layer contains calcium. The electrolyte includes the first component, and the first component is the fluorinated carbonate compound.

It can be seen from a comparison of Example 1 to Example 26 and Comparative Example 1 to Comparative Example 3 that the sodium secondary battery whose negative electrode film layer contains calcium and whose electrolyte includes the fluorinated carbonate compound has excellent cycling stability, low-temperature charging performance, and initial Coulombic efficiency, and has a low volume expansion rate after high-temperature storage.

It can be seen from Example 1 and Example 5 to Example 8 that when the mass fraction a of the fluorinated carbonate compound, based on the total mass of the electrolyte, ranges from 0.01% to 10%, the sodium secondary battery has a low battery volume expansion rate after high-temperature storage, and excellent low-temperature charging performance, initial Coulombic efficiency, and cycling stability. When the mass fraction a of the fluorinated carbonate compound ranges from 0.2% to 10%, the battery volume expansion rate, the low-temperature charging performance, the initial Coulombic efficiency, and the cycling stability of the sodium secondary battery after high-temperature storage can further be optimized.

It can be seen from Example 1 and Example 9 to Example 12 that, when based on the total mass of the negative electrode film layer, the mass fraction b of calcium in the negative electrode film layer ranges from 1 ppm to 3000 ppm, the sodium secondary battery has a low battery volume expansion rate after high-temperature storage, and excellent low-temperature charging performance, initial Coulombic efficiency, and cycling stability. When the mass fraction b of calcium in the negative electrode film layer ranges from 50 ppm to 1000 ppm, a low battery volume expansion rate after high-temperature storage, and better low-temperature charging performance, initial Coulombic efficiency, and cycling stability of the sodium secondary battery are achieved. It can be seen from Example 1, Example 5 to Example 12, and Example 17 that when a/b satisfies a/b ≥ 1, the sodium secondary battery has a low battery volume expansion rate after high-temperature storage, and excellent low-temperature charging performance, initial Coulombic efficiency, and cycling stability. When a/b satisfies 10000 ≥ a/b ≥ 10, a low battery volume expansion rate after high-temperature storage, and excellent low-temperature charging performance, initial Coulombic efficiency, and cycling stability of the sodium secondary battery are achieved.

It can be seen from a comparison of Example 1, Example 5, and Example 13 to Example 19 that when the mass fraction c of difluoro(oxalato)borate, based on the total mass of the electrolyte, ranges from 0.01% to 5%, the volume expansion rate of the battery after high-temperature storage can be reduced, and the low-temperature charging performance, the initial Coulombic efficiency, and the cycling stability of the battery can be improved. When the mass fraction c of difluoro(oxalato)borate ranges from 0.1% to 2%, the battery volume expansion rate of the sodium secondary battery after high-temperature storage can be further reduced, and the low-temperature charging performance, the initial Coulombic efficiency, and the cycling stability of the battery can be improved.

It can be seen from Example 13 to Example 19 that when c/a satisfies c/a ≥ 0.001, the sodium secondary battery has a low battery volume expansion rate after high-temperature storage, and excellent low-temperature charging performance, initial Coulombic efficiency, and cycling stability. When c/a satisfies 2 ≥ c/a ≥ 0.1, a low battery volume expansion rate after high-temperature storage, and excellent low-temperature charging performance, initial Coulombic efficiency, and cycling stability of the sodium secondary battery are achieved. It can be seen from Example 1 and Example 20 to Example 23 that when the mass fraction d of copper, based on the total mass of the positive electrode active material, ranges from 0% to 23%, the sodium secondary battery has a low battery volume expansion rate after high-temperature storage, and excellent low-temperature charging performance, initial Coulombic efficiency, and cycling stability. When the mass fraction d of copper ranges from 6.5% to 18%, a low battery volume expansion rate after high-temperature storage, and excellent low-temperature charging performance, initial Coulombic efficiency, and cycling stability of the sodium secondary battery are achieved.

It can be seen from a comparison of Example 1 and Example 24 to Example 26 that when the electrolyte includes the third component, the battery volume expansion rate after high-temperature storage, the low-temperature charging performance, the initial Coulombic efficiency, and the cycle stability of the sodium secondary battery can further be optimized.

It should be noted that this application is not limited to the foregoing implementations. The foregoing implementations are merely exemplary, and implementations that have substantially the same technical idea and that achieve the same effects within the scope of the technical solutions of this application all fall within the technical scope of this application. In addition, other implementations formed by applying various modifications that a person skilled in the art can conceive of to the implementations or by combining some of the constituent elements of the implementations without departing from the spirit of this application fall within the scope of this application.

## Claims

1. A sodium secondary battery, comprising:
a negative electrode sheet, wherein the negative electrode sheet comprises a negative electrode film layer, and the negative electrode film layer comprises calcium; and
an electrolyte, wherein the electrolyte comprises a first component, and the first component is a fluorinated carbonate compound.

2. The sodium secondary battery according to claim 1, wherein based on a total mass of the electrolyte, a mass fraction of the fluorinated carbonate compound is denoted as a, based on a total mass of the negative electrode film layer, a mass fraction of calcium in the negative electrode film layer is denoted as b, and a and b satisfy: a/b ≥ 1; and optionally, a and b satisfy: 10000 ≥ a/b ≥ 10.

3. The sodium secondary battery according to claim 1 or 2, wherein based on the total mass of the electrolyte, the mass fraction a of the fluorinated carbonate compound ranges from 0.01% to 10%; and optionally, a ranges from 0.2% to 10%.

4. The sodium secondary battery according to claim 1 or 2, wherein based on the total mass of the negative electrode film layer, the mass fraction b of calcium in the negative electrode film layer ranges from 1 ppm to 3000 ppm; and optionally, b ranges from 50 ppm to 1000 ppm.

5. The sodium secondary battery according to claim 1 or 2, wherein the fluorinated carbonate compound comprises a compound represented by Formula I: 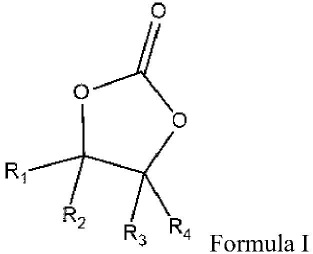 wherein R₁, R₂, R₃, and R₄ each independently comprise at least one of a hydrogen atom, a halogen atom, a C₁₋₆ hydrocarbyl group, a C₁₋₃ haloalkyl group, a C₁₋₃ alkoxy group, a C₁₋₃ haloalkoxy group, an ester group, a cyano group, a sulfonic acid group, and an isocyanate group; and at least one of R₁, R₂, R₃, and R₄ is a fluorine atom.

6. The sodium secondary battery according to claim 1 or 2, wherein the fluorinated carbonate compound comprises at least one of the following compounds:

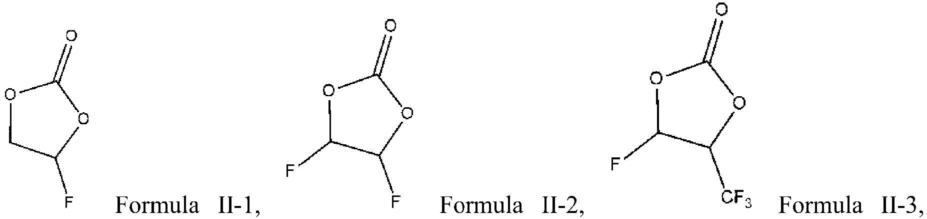

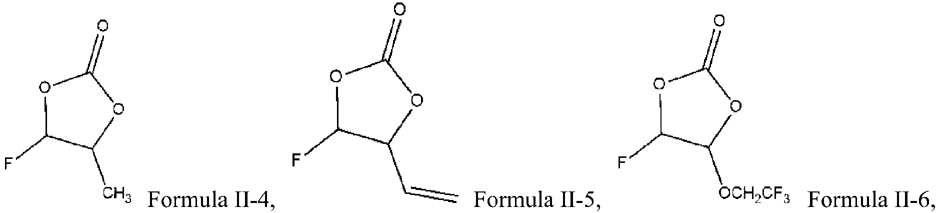

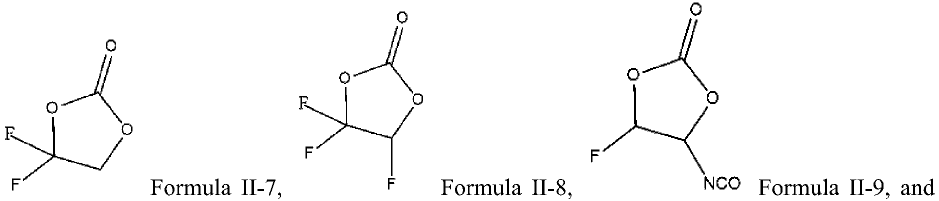

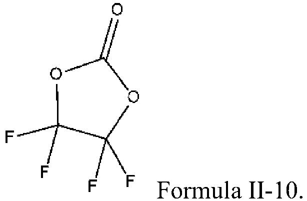

7. The sodium secondary battery according to claim 1, wherein the electrolyte further comprises a second component, the second component is difluoro(oxalato)borate, and difluoro(oxalato)borate satisfies at least one of the following conditions:
(1) based on a total mass of the electrolyte, a mass fraction of difluoro(oxalato)borate is denoted as c, a mass fraction of the fluorinated carbonate compound is denoted as a, and c and a satisfy: c/a ≥ 0.001; and optionally, 2 ≥ c/a ≥ 0.1; and
(2) based on the total mass of the electrolyte, the mass fraction c of difluoro(oxalato)borate ranges from 0.01% to 5%; and optionally, from 0.1% to 2%.

8. The sodium secondary battery according to claim 7, wherein a general chemical formula of difluoro(oxalato)borate is represented by Formula III:
(F₂C₂O₄B)_{y}M Formula III
wherein M comprises one or more of Li, Na, K, Rb, Cs, Mg, Ca, Ba, Fe, Ni, and Al, and y is 1, 2, or 3.

9. The sodium secondary battery according to claim 1, wherein the negative electrode film layer comprises a negative electrode active material, and the negative electrode active material comprises one or more of hard carbon, sodium metal, sodium-tin alloy, and metal oxide.

10. The sodium secondary battery according to claim 1, further comprising a positive electrode sheet, wherein the positive electrode sheet comprises a positive electrode active material, and the positive electrode active material comprises sodium transition metal oxide.

11. The sodium secondary battery according to claim 10, wherein sodium transition metal oxide comprises NaₘCuₙXₒFeₚMn_{q}O₂₋ₛ, wherein X comprises one or more of Li, Be, B, Mg, Al, K, Ca, Ti, Co, Ni, Zn, Ga, Sr, Y, Nb, Mo, In, Sn, Fe, and Ba, 0 ≤ m ≤ 0.5, 0 ≤ n ≤ 0.5, 0 ≤ o < 0.5, 0 ≤ p ≤ 0.5, 0 ≤ q ≤ 0.68, n+o+p+q=1, 0 ≤ s < 0.2; and
optionally, sodium transition metal oxide comprises at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and Na_{9/10}[Cu_{2/5}Fe_{1/10}Mn_{1/2}]O₂.

12. The sodium secondary battery according to claim 10, wherein the positive electrode active material further comprises copper, and based on a total mass of the positive electrode active material, a mass fraction d of copper ranges from 0.01% to 23%; and optionally, from 6.5% to 18%.

13. The sodium secondary battery according to claim 1, wherein the electrolyte further comprises a third component, and the third component is one or more of vinylene carbonate, vinyl ethylene carbonate, 1,3-propane sultone, prop-1-ene-1,3-sultone, ethylene sulfate, maleic anhydride, succinic anhydride, triallyl phosphate, sodium tetrafluoro(oxalato)phosphate, sodium difluorobis(oxalato)phosphate, sodium difluorophosphate, and sodium fluorosulfonate.

14. The sodium secondary battery according to claim 13, wherein based on a total mass of the electrolyte, a mass fraction of the third component ranges from 0.01% to 10%; and optionally, from 0.1% to 5%.

15. An electric device, comprising the sodium secondary battery according to any one of claims 1 to 14.
